# EUROPEAN PATENT APPLICATION

(11) **EP 4 804 412 A1**
(43) Date of publication of application: **09.09.2026**
(21) Application number: 23962336.6
(22) Date of filing: 20.12.2023
(51) Int. Cl.: H04B 1/04, H04B 17/24, H04L 1/00, H04L 27/36, H04W 8/24

(54) **METHOD AND APPARATUS FOR NONLINEARITY COMPENSATION IN WIRELESS COMMUNICATION SYSTEM**

(30) Priority: 19.12.2023 KR 20230185561
(71) Applicant: Samsung Electronics Co., Ltd., Suwon-si, Gyeonggi-do 16677 (KR)
(72) Inventor: PARK, Seungil, Suwon-si, Gyeonggi-do 16677 (KR); KIM, Suhwook, Suwon-si, Gyeonggi-do 16677 (KR); SEO, Bongsung, Suwon-si, Gyeonggi-do 16677 (KR); JANG, Jeonghyeon, Suwon-si, Gyeonggi-do 16677 (KR)
(74) Representative: Nederlandsch Octrooibureau
(86) International application number: PCT/KR2023/021122
(87) International publication number: WO 2025/135230

(57) **Abstract**

The present disclosure relates to a 5G or 6G communication system for supporting higher data transfer rates than a 4G communication system, such as LTE. According to an embodiment of the present disclosure, provided is a method performed by a base station of a wireless communication system. The method comprises the steps of: transmitting a non-linearity measurement request message; transmitting at least one of a pilot signal and data; receiving, on the basis of at least one of the pilot signal and the data, a non-linearity measurement report message including information about non-linearity measurement results; and determining a supportable modulation and coding scheme (MCS) level on the basis of the information about the non-linearity measurement results.

## Description

### [Technical Field]

The disclosure relates to a wireless communication system. More specifically, the disclosure relates to a method and an apparatus for measuring non-linearity generated when a base station transmits a signal, and compensating for the same.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discussion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

Since a 5G communication system must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.
eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of things provides communication functions while being provided to various sensors and various devices, it must support a large number of UEs (e.g., 1,000,000 UEs/km2) in a cell. In addition, a UE supporting mMTC requires wider coverage than those of other services provided by the 5G communication system because the UE is likely to be located in a shadow area, such as a basement of a building, which is not covered by the cell due to the nature of the service. The UE supporting mMTC must be configured to be inexpensive, and requires a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10-5 or less. Accordingly, for services supporting URLLC, the 5G communication system needs to provide a smaller transmit time interval (TTI) than for other services, and at the same time, a design requirement of allocating wide resources in the frequency band is needed to secure the reliability of the communication link.

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as mobile edge computing (MEC), clouds, and the like) over the network. In addition, through designing new protocols to be used in 6G communication systems, developing mecahnisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In order to satisfy such various services, a wide bandwidth is needed. Therefore, research on high bandwidth, which has not been used in the past, is being conducted, and this is continuing in the form of mmWave and THz research for 5G and subsequent 6G communication systems. However, in the millimeter wave band, the radio wave path loss problem is serious, and thus the coverage is reduced. Due to such problems, in order to install a base station having a small coverage, it is necessary to install a large number of base stations, which causes a lot of capital expenditures (CAPEX).

In order to solve the above-described coverage problems, various technologies have been proposed. Among the technologies, there is a method of transmitting signals at higher output power by using a power amplifier (PA). In a high output power region of the PA, non-linearity in which the phase and magnitude of a transmission signal are distorted is exhibited, and thus additional technology for compensating for the same is required to use the PA at high output power.

In order to use the PA at high power, a technology such as digital pre-distortion (DPD) may be used at the transmitter end, as a typical example. DPD is a technology of predicting the distortion of the PA, distorting the transmitted signal in advance and transferring the same to the PA, and it is important to well predict the non-linearity of the PA. However, the non-linearity of the PA has a property that changes over time or according to the surrounding environment, and thus when such a change is detected in the DPD algorithm, a time for updating the coefficients used in the DPD algorithm is required.

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent IoT services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

### [Disclosure]

### [Technical Problem]

As described above, as mobile communication systems are developed, various services can be provided, and thus the need for an effective method of compensating for non-linearity of a PA for the purpose of improving data reception performance and increasing coverage has been increased.

### [Technical Solution]

According to an embodiment of the disclosure, a method performed by a base station in a wireless communication system is provided. The method may include transmitting a non-linearity measurement request message, transmitting at least one of a pilot signal or data, receiving a non-linearity measurement report message including information on a non-linearity measurement result based on the at least one of the pilot signal or the data, and based on the information on the non-linearity measurement result, determining a supportable modulation and coding scheme (MCS) level.

According to an embodiment of the disclosure, a method performed by a terminal in a wireless communication system is provided. The method may include receiving a non-linearity measurement request message, receiving at least one of a pilot signal or data, and transmitting a non-linearity measurement report message including information on a non-linearity measurement result based on the at least one of the pilot signal or the data. The information on the non-linearity measurement result may be associated with a modulation and coding scheme (MCS) level supportable by a base station.

According to an embodiment of the disclosure, a base station in a wireless communication system is provided. The base station may include a transceiver and a controller. The controller may be configured to control the transceiver to transmit a non-linearity measurement request message, control the transceiver to transmit at least one of a pilot signal or data, control the transceiver to receive a non-linearity measurement report message including information on a non-linearity measurement result based on the at least one of the pilot signal or the data, and based on the information on the non-linearity measurement result, determine a supportable modulation and coding scheme (MCS) level.

According to an embodiment of the disclosure, a terminal in a wireless communication system is provided. The terminal may include a transceiver and a controller. The controller may be configured to control the transceiver to receive a non-linearity measurement request message, control the transceiver to receive at least one of a pilot signal or data, and control the transceiver to transmit a non-linearity measurement report message including information on a non-linearity measurement result based on the at least one of the pilot signal or the data. The information on the non-linearity measurement result may be associated with a modulation and coding scheme (MCS) level supportable by a base station.

### [Advantageous Effects]

According to the disclosure, the degree of non-linearity which may be caused when a base station transmits a signal can be measured with assistance from a terminal, and a non-linearity compensation technique can be selectively applied by the terminal according to the degree of non-linearity, whereby non-linearity of a PA can be efficiently compensated.

Advantageous effects obtainable from the disclosure may not be limited to the above-mentioned effects, and other effects which are not mentioned herein may be clearly understood from the following description by those skilled in the art to which the disclosure pertains.

### [Description of Drawings]

FIG. 1 illustrates a next-generation communication system according to an embodiment of the disclosure.
FIG. 2 illustrates signal distortion due to non-linearity characteristics of a PA according to an embodiment of the disclosure.
FIG. 3 illustrates a DPD model according to an embodiment of the disclosure.
FIG. 4 illustrates a reception path of a receiver end including an AI-based non-linearity compensation block according to an embodiment of the disclosure.
FIG. 5 illustrates an example of AI-based non-linearity compensation according to an embodiment of the disclosure.
FIG. 6 illustrates a situation in which DPD updating is required in a base station including multiple antennas according to an embodiment of the disclosure.
FIG. 7 is a sequence diagram illustrating a procedure in which a UE measures non-linearity upon a request from a base station according to an embodiment of the disclosure.
FIG. 8 is a sequence diagram illustrating a procedure of acquiring non-linearity measurement-related capability information of a UE during initial access according to an embodiment of the disclosure.
FIG. 9 is a sequence diagram illustrating a procedure in which a UE compensates for non-linearity when a non-linearity problem occurs in a signal transmitted by a base station, according to an embodiment of the disclosure.
FIG. 10 illustrates a processing time for performing DPD updating by a base station according to an embodiment of the disclosure.
FIG. 11 illustrates a procedure in which a base station specifies a time for performing non-linearity compensation to a UE according to an embodiment of the disclosure.
FIG. 12 illustrates a procedure in which a base station updates a time for performing non-linearity compensation for a UE according to an embodiment of the disclosure.
FIG. 13 is a sequence diagram illustrating a procedure for signaling-based non-linearity compensation activation/deactivation according to an embodiment of the disclosure.
FIG. 14 is a sequence diagram illustrating a procedure for signaling-based non-linearity compensation activation/deactivation according to an embodiment of the disclosure.
FIG. 15 is a sequence diagram illustrating a procedure for signaling-based non-linearity compensation activation/deactivation according to an embodiment of the disclosure.
FIG. 16 is a sequence diagram illustrating a procedure for signaling-based non-linearity compensation activation/deactivation according to an embodiment of the disclosure.
FIG. 17 is a flowchart illustrating operation of a base station according to an embodiment of the disclosure.
FIG. 18 is a flowchart illustrating operation of a terminal according to an embodiment of the disclosure.
FIG. 19 illustrates a block diagram of a UE according to an embodiment of the disclosure.
FIG. 20 illustrates a block diagram of a base station according to an embodiment of the disclosure.

### [Mode for Invention]

Hereinafter, embodiments of the disclosure will be described with reference to the accompanying drawings.

In describing the embodiments, descriptions related to technical contents well-known in the relevant art and not associated directly with the disclosure will be omitted.

Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. Throughout the disclosure, the same or like reference numerals designate the same or like elements.

The advantages and features of the disclosure and ways to achieve them will be apparent by making reference to embodiments as described below in detail in conjunction with the accompanying drawings.

However, the disclosure is not limited to the embodiments set forth below, but may be implemented in various different forms. The present embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, some of terms and names defined in the 3rd generation partnership project (3GPP) standards (standards for 5G, NR, long term evolution (LTE), or similar systems) may be used for the sake of descriptive convenience. Moreover, terms and names newly defined in a next-generation communication system (e.g., 6G or beyond 5G system) to which the disclosure is applicable or employed in the existing communication systems may also be used. Use of these terms is not intended to limit the disclosure by the terms and names, and the disclosure may be applied in the same way to systems that conform other standards, and may be changed into other forms without departing from the technical idea of the disclosure.

As used herein, it will be understood that the singular expressions "a", "an", and "the" include plural expressions unless the context clearly indicates otherwise.

As used in an embodiment of the disclosure, the terms including an ordinal number, such as "a first" and "a second" may be used to describe various elements, but the corresponding elements should not be limited by such terms. The above terms are used only to distinguish one element from another. For example, a first element may be termed a second element, and similarly, a second element may be termed a first element without departing from the scope of protection of the disclosure.

As used in an embodiment of the disclosure, the term "and/or" includes any one or combinations of a plurality of relevant items enumerated.

The terms as used in an embodiment of the disclosure are merely used to describe specific embodiments, and are not intended to limit the disclosure. Singular expressions include plural expressions unless the context clearly dictates otherwise. As used herein, the expression "include" or "have" is intended to specify the existence of mentioned features, numbers, steps, operations, elements, components, or combinations thereof, and should be construed as not precluding the possible existence or addition of one or more other features, numbers, steps, operations, elements, components, or combinations thereof.

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Before the detailed description of the disclosure, examples of construable meanings of some terms used herein are given below. However, it should be noted that the terms are not limited to the examples of the construable meanings as given below.

In the disclosure, a terminal (or communication terminal) is an entity that communicates with a base station or any other terminal, and may be referred to as a node, a user equipment (UE), a next generation UE (NG UE), a mobile station (MS), a device, a terminal, or the like. The terminal may include at least one of a smartphone, a tablet personal computer (PC), a mobile phone, a video phone, an electronic book reader, a desktop PC, a laptop PC, a netbook computer, a personal digital assistant (PDA), a portable multimedia player (PMP), an MP3 player, a medical device, a camera, and a wearable device. Also, the terminal may include at least one of a television, a digital video disk (DVD) player, an audio, a refrigerator, an air conditioner, a vacuum cleaner, an oven, a microwave oven, a washing machine, an air purifier, a set-top box, a home automation control panel, a security control panel, a media box, a game console, an electronic dictionary, an electronic key, a camcorder, and an electronic photo frame. In addition, the terminal may include at least one of various medical devices (e.g., various portable medical measuring devices (blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global navigation satellite system (GNSS), an event data recorder (EDR), a flight data recorder (FDR), a vehicle infotainment device, electronic equipment for a ship (e.g., ship navigation device, gyro-compass, etc.), avionics, a security device, an automobile head unit, a home or industrial robot, a drone, an automatic teller's machine (ATM) in banks, point of sales (POS) in a shop, or Internet of things devices (e.g., light bulb, various sensors, electric or gas meter, fire alarm, thermostat, streetlamp, toaster, sporting goods, hot water tank, heater, boiler, etc.). Furthermore, the terminal may include various types of multimedia systems capable of communication functions. The disclosure is not limited by the above examples, and the terminal may also be referred to by terms having the same or similar meanings.

In the disclosure, a base station is an entity that communicates with terminals and allocates resources to the terminals, and may be referred to as a base station (BS), a Node B (NB), a next generation radio access network (NG RAN), an access point (AP), a transmission and reception point (TRP), a satellite base station, a wireless access unit, a base station controller, a node on a network, or the like. Alternatively, according to function split, the base station may be referred to as a central unit (CU) or a distributed unit (DU). However, the disclosure is not limited by the above examples, and the base station may also be referred to by terms having the same or similar meanings.

As used herein, control information may be referred to as a control message or control signaling, or may be referred to as a medium access control (MAC)-control element (CE). downlink control information (DCI), uplink control information (UCI), or a radio resource control (RRC) message according to the context, and the disclosure is not limited by the above examples, and the control information may also be referred to by terms having the same or similar meanings.

As used herein, a transmitting node may be referred to as a transmitter or a first device, and may mean a terminal in the case of an uplink and mean a base station in the case of a downlink.

As used herein, a receiving node may be referred to as a receiver or a second device, and may mean a base station in the case of an uplink and mean a terminal in the case of a downlink.

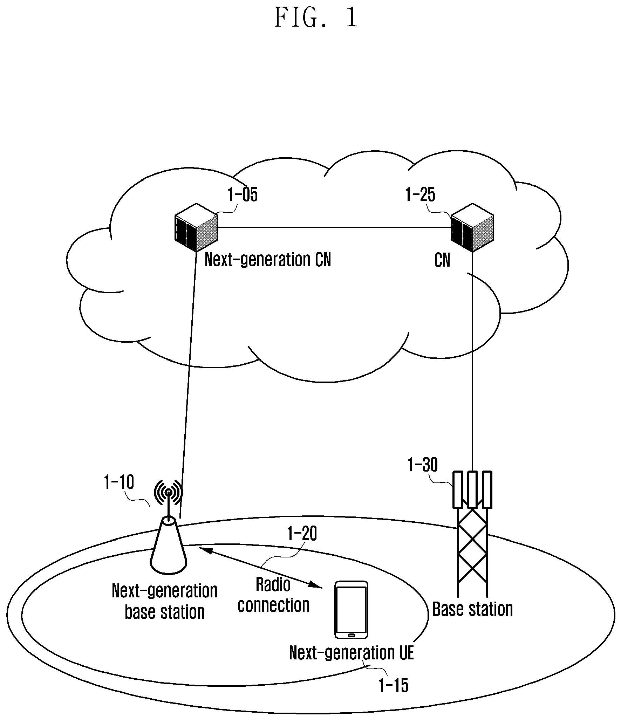

FIG. 1 illustrates a next-generation communication system according to an embodiment of the disclosure.

Referring to FIG. 1, a next-generation communication system may include a next generation base station 1-10 and a next-generation core network (CN) 1-05. A next-generation UE 1-15 may access an external network through the next-generation base station 1-10 and the next-generation CN 1-05.

In FIG. 1, the next-generation base station 1-10 may perform a role corresponding an eNB in the conventional LTE communication system or an NR base station (gNB) in an NR communication system. Alternatively, in the embodiments of the disclosure, the next-generation base station 1-10 may refer to an LTE base station or an NR base station. The next-generation base station 1-10 may be connected to the UE 1-15 through a wireless channel, and may provide communication services much better than those provided by the conventional node B. The next-generation CN 1-05 may perform a role corresponding to the NR core network of the NR communication system. In addition, the next-generation communication system to which the disclosure is applicable may be linked to the conventional LTE communication system or the NR communication system. When being linked to the LTE communication system, the communication system may be connected to a mobility management entity (MME) 1-25 through a network interface, and the MME may be connected to an eNB 1-30, which is the conventional LTE base station. Alternatively, when being linked to the NR communication system, the communication system may be connected to the NR CN 1-25 through a network interface, and the NR CN 1-25 may be connected to the NR base station 1-30. The next-generation communication system to which the disclosure is applicable is not limited to the next-generation communication system illustrated in FIG. 1. The above-described next-generation communication system may be implemented through various types of base stations, UEs, and CNs, and the disclosure may be applied even in such cases.

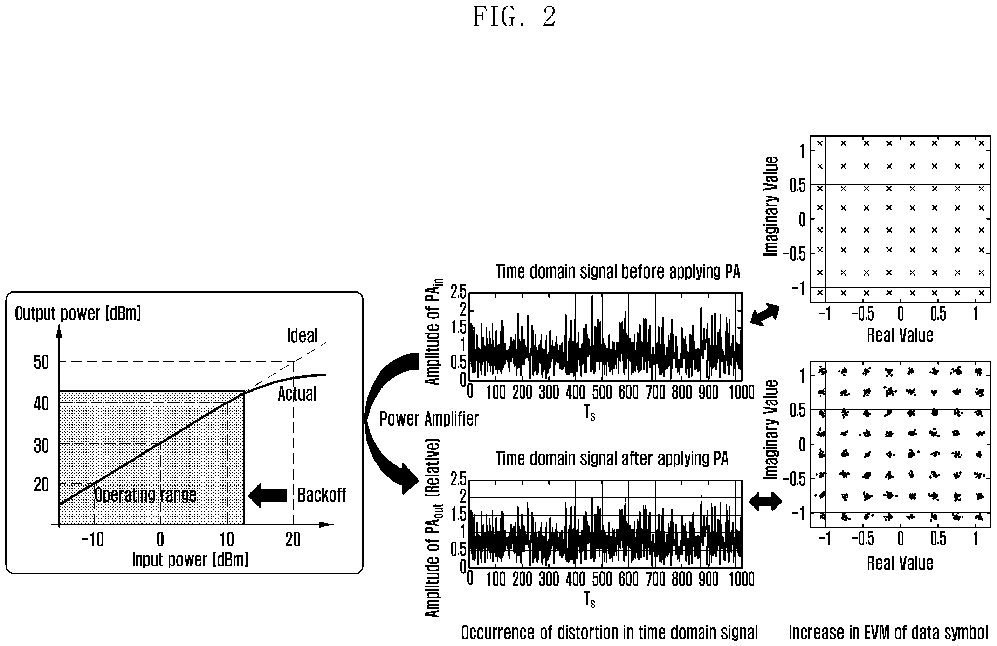

In a communication system of the disclosure, for the purpose of coverage expansion, a signal can be transmitted at the transmitter end through the PA by increasing transmission power. However, there is a problem in that signal distortion occurs due to the non-linearity characteristics of the PA. Hereinafter, the problem is described in detail with reference to FIG. 2.

FIG. 2 illustrates signal distortion due to non-linearity characteristics of a PA according to an embodiment of the disclosure.

Referring to FIG. 2, in a region (a small-signal region) in which power (input power) of a signal input to a PA is small, linearity that the power (PAout) of a signal output from the PA increases in proportion to a power gain value (G) of the PA as the input power (PAin) increases is exhibited. However, in a region in which the input power of the PA is high, power (PAout) of the signal output from the PA is not amplified by the power gain value (G) and non-linearity that the phase or amplitude is distorted is exhibited.

Accordingly, due to such non-linearity that the phase and amplitude of the signal is distorted in the high-output region, a problem that an error vector magnitude (EVM) of a transmitted data symbol increases and data reception performance is deteriorated may occur. In order to avoid the signal distortion problem caused by the non-linearity of the PA, a scheme of applying an output back-off to limit an operating range of the PA to a linear interval has also been proposed. However, the output back-off scheme may reduce the EVM of the transmitted symbol, but consequently, may result in coverage loss because the transmission output is restricted.

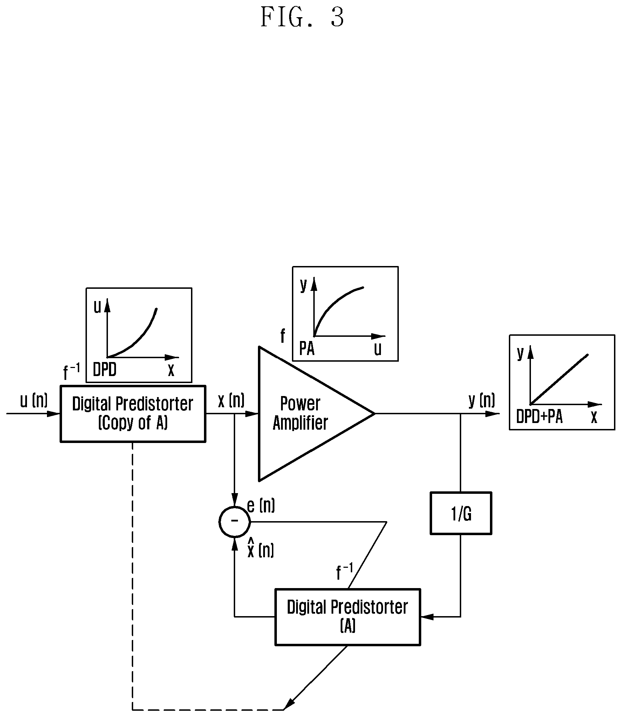

FIG. 3 illustrates a DPD model according to an embodiment of the disclosure.

In the next-generation communication system such as 6G, a scheme of using the high-output region of the PA as is, and compensating for non-linearity in advance by using DPD at the transmitter end has been considered.

Referring to FIG. 3, µ(*n*) is an input signal before the DPD is applied, *x*(*n*) is a signal obtained by applying the DPD to µ(*n*), and *y*(*n*) is a signal obtained by amplifying *x*(*n*) through the PA. *y*(*n*) is multiplied by 1/G, which is the reciprocal of the gain value (G) of the PA, and used as the input of the DPD model, and the output of the DPD model may be expressed as *x̂*(*n*). Here, when an estimation error is defined as *e*(*n*)*-r*(*n*)-*x̂*(*n*), for e = x - x̂ representing *e*(*n*) in a vector format for N sample blocks, the coefficients of the DPD model which minimize the value of ∥e∥² may be derived.

As an example of the DPD model, a general memory polynomial (GMP) model may be expressed by Equation 1 below.$\begin{matrix}{y}_{GMP} \left(n\right) = {\sum }_{k = 0}^{{K}_{a} - 1} {\sum }_{l = 0}^{{L}_{a} - 1} {a}_{kl} x \left(n-l\right) {\left|x\left(n-l\right)\right|}^{k} \\ + {\sum }_{k = 1}^{{K}_{b}} {\sum }_{l = 0}^{{L}_{b} - 1} {\sum }_{m = 1}^{{M}_{b}} {b}_{kml} x \left(n-l\right) {\left|x\left(n-l-m\right)\right|}^{k} \\ + {\sum }_{k = 1}^{{K}_{c}} {\sum }_{l = 0}^{{L}_{c} - 1} {\sum }_{m = 1}^{{M}_{c}} {c}_{klm} x \left(n-l\right) {\left|x\left(n-l+m\right)\right|}^{k} .\end{matrix}$

Here, for a specific time instance *n, y_{GMP}*(*n*) is the output value of the GMP model, *x*(*n* - *l*) is the input signal of the GMP model delayed by *l* samples, and, *aₖₗ*, *bₖₗₘ*, and *cₖₗₘ* are coefficients to be determined.*Kₐ*, *Lₐ*, *K_{b}, L_{b}, M_{b}*, *K_{c}, L_{c},* and *M_{c}* are predetermined integer values , and determine the order, complexity, and memory depth of the GMP model.

However, the scope of the disclosure is not limited to the above-described GMP model, and various other models may be used.

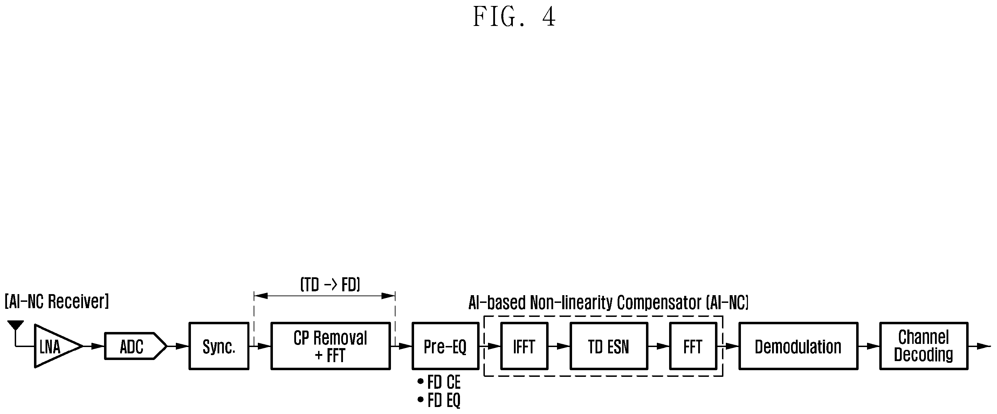

FIG. 4 illustrates a reception path of a receiver end including an AI-based non-linearity compensation block according to an embodiment of the disclosure.

Referring to FIG. 4, the signal reception path of the receiver end includes a low noise amplifier (LNA) block, an analog to digital converter (ADC) block, and a sync block, a cyclic prefix (CP) removal and fast Fourier transform (FFT) block, a pre-equalization (pre-EQ) block, an inverse fast Fourier transform (IFFT) block, a time domain based echo state network (TD-ESN) block, a fast Fourier transform (FFT) block, a demodulation block, and a channel decoding block. Here, a set of the IFFT block, the TD-ESN block, and the FFT block may be referred to as an AI-based non-linearity compensator (AI-NC).

Hereinafter, the detailed operations of each block will be described. The LNA block may amplify the received RF signal. The ADC block may convert an analog signal into a digital signal. The sync block may perform synchronization for the signal. The CP removal and FFT block may remove the CP and convert a time domain signal into a frequency domain signal through the FFT. The pre-EQ block may perform channel estimation and channel equalization based on the frequency domain signal. Thereafter, the IFFT block may convert the signal to which the channel EQ is applied into the time domain signal through the IFFT. The TD-ESN block may perform non-linearity compensation for the time domain signal. For example, the TD-ESN block may acquire non-linearity information indicating signal distortion, etc. generated due to the non-linearity of the PA used in the transmitter end, and perform non-linearity compensation for the time domain signal, based on the non-linearity information.

For example, the TD-ESN block may perform AI-based non-linearity compensation. The TD-ESN block may input, to an AI model, a pilot part of the signal to which the channel EQ is applied, and train the AI model by optimizing an objective function (e.g., minimizing a loss function or maximizing a utility function) for the difference between a result output from the AI model (a value predicted by the pilot received at the receiver end) and a transmission pattern of a pilot provided to the receiver end by the transmitter end. That is, the TD-ESN block may input, to the AI model, the pilot distorted by the non-linearity of the PA, and train the AI model by optimizing the AI model so that the value predicted by the AI model is close to the transmission pattern of the corresponding pilot. Thereafter, the TD-ESN block may input the data part of the signal to which the channel EQ is applied to the trained AI model, thereby acquiring data in which the PA non-linearity is compensated (i.e., data in which the distortion due to the PA non-linearity is removed) as an output value of the AI model. Here, the AI model may be implemented by an AI-related algorithm including an echo state network (ESN).

The signal for which the non-linearity of the PA has been compensated may be converted into a frequency domain signal through the FFT block, and the original input data stream may be recovered by demodulating and decoding a modulated symbol through the demodulation block and the channel decoding block.

Some of the blocks shown in FIG. 4 may be omitted, and one block may perform the functions of other blocks. In addition, each of the elements illustrated in FIG. 4 may be implemented using only hardware or a combination of hardware and software/firmware. For example, at least some of the elements in FIG. 4 may be implemented by software, while other elements may be implemented by configurable hardware or a combination of configurable hardware and software. For example, the FFT block and the IFFT block may be implemented by configurable software algorithms. In addition, although it has been described as using the FFT and the IFFT, this is only an example and is not intended to limit the scope of the disclosure. Therefore, other types of transforms, such as discrete Fourier transform (DFT) and inverse discrete Fourier transform (IDFT), may be used.

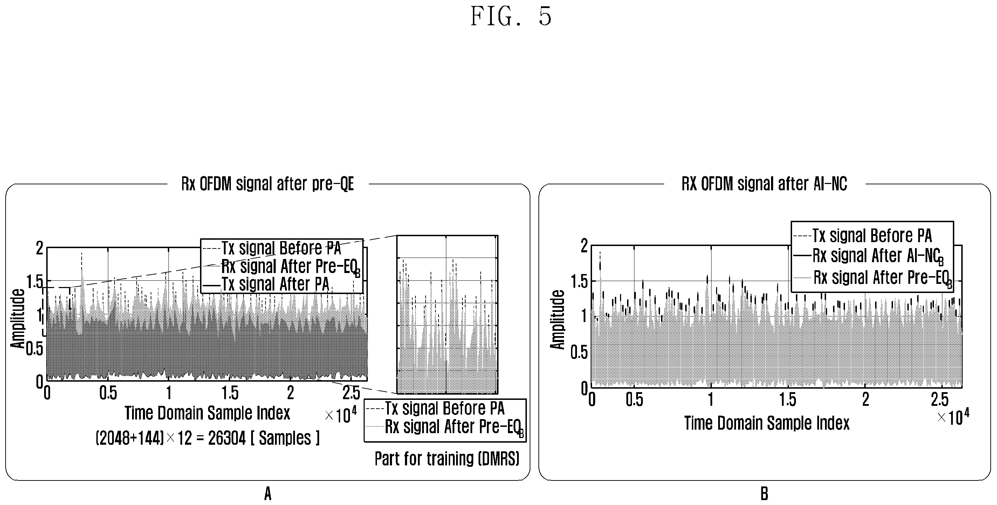

FIG. 5 illustrates an example of AI-based non-linearity compensation according to an embodiment of the disclosure.

As described above, the transmitter end may transmit a signal by amplifying transmission power through the PA, and the receiver end may receive the signal and apply channel EQ. However, as shown in part (A) of FIG. 5, there is distortion caused by the non-linearity of the PA for the phase or amplitude of the signal to which the channel EQ has been applied. Therefore, the receiver end may perform non-linearity compensation for the signal to which the channel EQ has been applied. The receiver end may input the pilot (e.g., DMRS) of the signal to which channel EQ is applied to the AI model, and train the AI model such that the value predicted by the AI model has a small error from the transmission pattern of the pilot (i.e., the pattern before the transmitter end uses the PA, which is previously defined between the transmitter end and the receiver end). Thereafter, the receiver end may input the data part of the signal to which channel EQ has been applied to the AI model to obtain data for which the non-linearity has been compensated.

Referring part (B) of FIG. 5, it can be identified that the signal for which the non-linearity of the PA is compensated is more similar to the signal before the PA is used at the transmitter end, compared to the signal to which only the channel EQ is applied. Therefore, by compensating for the non-linearity of the PA in the receiver end, the data reception performance can be improved.

The DPD requires an operation of adjusting the coefficients of the DPD algorithm by predicting the non-linearity of the PA, based on past information. Therefore, in an environment in which the non-linearity of the PA has been significantly changed than before, a problem may occur in that the predicted coefficients of the DPD algorithm become inaccurate, and this may cause an increase in transmission signal distortion and the EVM performance may be degraded.

In order to sense whether the non-linearity of the PA has changed, the base station may sample a signal having passed through the PA to determine whether the DPD has been well operated. If it is determined that the DPD has not been well operated, a process of changing the DPD algorithm, changing the coefficients even within the same DPD algorithm, and the like may be performed. In order to obtain a new coefficient of the DPD algorithm, a time delay may occur in proportion to the number of coefficients used in the algorithm, and the quality of the transmission signal after passing through the PA may be degraded during this time delay, compared to the normal situation. In the case where the quality of the transmission signal is degraded as described above, when a modulated signal having a high modulation order (e.g., 1024-QAM, 4096-QAM, or higher) is used as in a 6G communication system, the signal transmitted by the base station needs to satisfy EVM requirements for each modulation order. However, there is a problem in that it is difficult for the base station to determine whether the EVM requirements are satisfied in a situation where the quality of the transmission signal is degraded. Therefore, in the above-described situation in the conventional art, when the modulation signal having the high modulation order is used, a scheme of sequentially reducing the modulation order is used after repeated transmission failures.

The disclosure is directed to resolving problems that may occur in the above-described conventional art from two major perspectives.

A first method is to accurately identify the maximum modulation order available for the base station in case that the quality degradation in the transmission signal occurs in the PA of the base station, thereby preventing unnecessary transmission failures, and a second method is to activate an additional non-linearity compensation process in the UE in case that the quality degradation in the transmission signal occurs in the PA of the base station, thereby improving the signal quality at the receiver end.

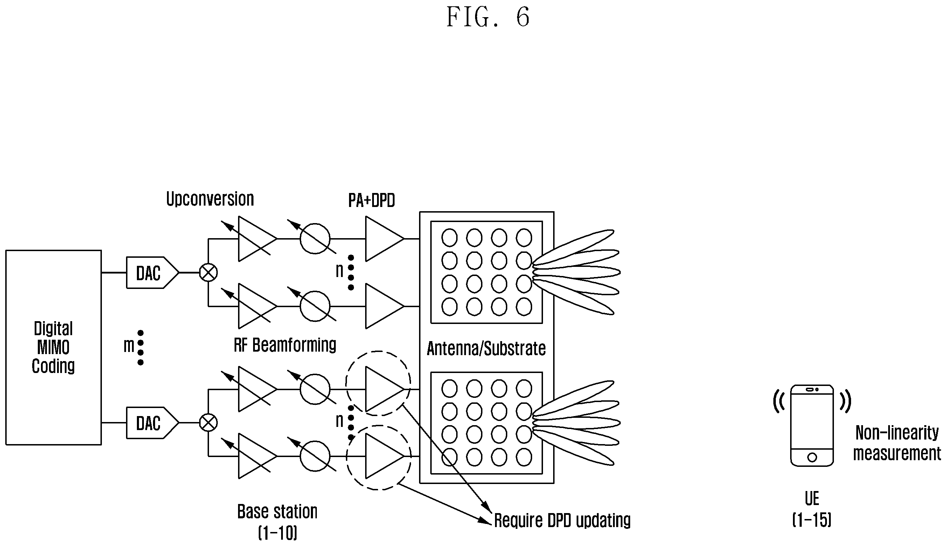

FIG. 6 illustrates a situation in which DPD updating is required in a base station including multiple antennas according to an embodiment of the disclosure.

Referring to FIG. 6, a base station 1-10 may use a multi-antenna structure capable of supporting a massive multiple-input multiple-output (MIMO) transmission/reception technique, and multiple PAs may exist to support the same.

The base station 1-10 may detect that a non-linearity problem has occurred in some of the multiple PAs and that DPD updating is required accordingly. However, as described above, the base station 1-10 may have difficulty in estimating how much the non-linearity problem affects the reception performance of the receiver end (i.e., a UE 1-15).

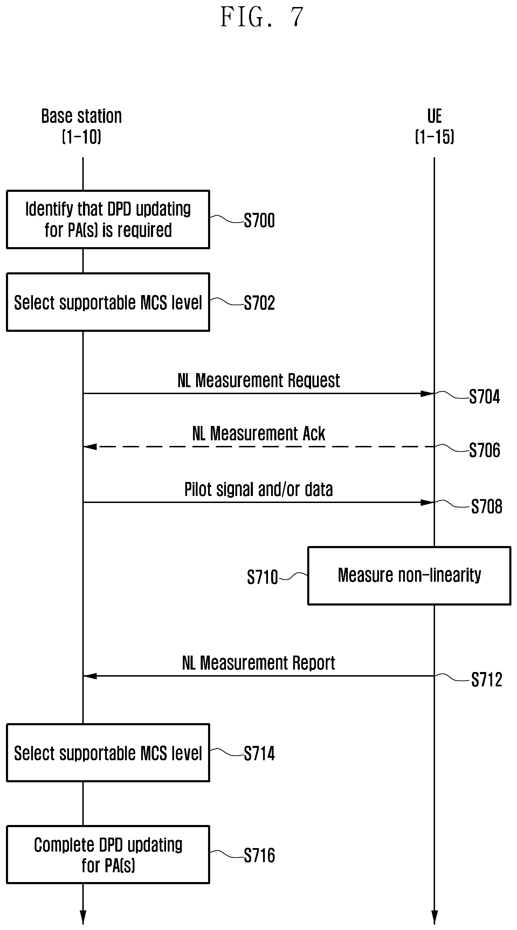

Therefore, the base station 1-10 may request non-linearity measurement from the UE (1-15), receive a measurement result, and adjust a modulation and coding scheme (MCS) level that can be supported during DPD updating, based on the received measurement result. More specific operations will be described below with reference to FIG. 7.

FIG. 7 is a sequence diagram illustrating a procedure in which a UE measures non-linearity upon a request from a base station according to an embodiment of the disclosure.

In operation S700, the base station 1-10 may identify that DPD updating for the PA(s) is required. For example, when PA characteristics have changed in PAs a, b, and c in a transmitter having n PAs, it may be a situation in which the coefficients of DPD blocks for supporting the corresponding PAs may not have been updated yet, or all situations in which the non-linearity of the PA is not well controlled than before due to a specific cause may be assumed.

In operation S702, the base station 1-10 may configure a supportable MCS level suitable for the current situation by using a predefined rule. For example, the base station 1-10 may configure the maximum MCS level that can be supported, based on the past information, or may configure the maximum MCS level that can be supported, based on the number of PAs for which the DPD updating is required, in a situation where there is no past information. For example, the maximum supported MCS level according to the number of PAs requiring the DPD updating may be determined as in [Table 1] below.

**[Table 1]**

| Number of PAs for which DPD updating is required | Maximum supportable MCS level |
|---|---|
| 0 | 4096 QAM |
| 1, 2, 3 | 1024 QAM |
| Or more | 256 QAM |

In operation S704, the base station 1-10 may transmit a message (e.g., NL measurement request) to the UE 1-15 to request non-linearity measurement. In a cell environment in which multiple UEs exist, the base station 1-10 may select UE(s) for which non-linearity (NL) measurement is to be requested. For example, the base station 1-10 may select UE(s), based on any one of the following schemes or a combination thereof.
1) Round robin type selection
2) Random selection
3) Selection after sorting in descending order of the amount of current DL data
4) Round robin type selection from among UEs having current DL data
5) Random selection from among UEs having current DL data
6) Selection after sorting in the order of the current channel situation being good
7) Round robin type selection from among UEs having current channel situation at a predetermined level or higher
8) Random selection from among UEs having current channel situation at a predetermined level or higher

Here, schemes 1) and 2) have an advantage of not increasing the complexity of the base station. Schemes 3) to 5) have an advantage in that, if a UE having DL data is selected, the base station does not need to additionally allocate and transmit data signals and pilot signals for NL measurement. Schemes 6) to 8) have an advantage in that a UE having a good channel condition may have a relative advantage in non-linearity measurement, and thus may obtain a more accurate non-linearity measurement result.

In operation S706, the UE 1-15 may transmit, to the base station 1-10, a response (e.g., NL measurement acknowledgment) to the message requesting the non-linearity measurement.

In operation S708, the base station 1-10 may transmit a pilot signal and/or data to the UE 1-15. For example, if there is no DL data to be transmitted to the current UE 1-15, data and/or pilot signals, which are defined in advance for NL measurement, may be transmitted. Separate data and/or pilot signals therefor may be defined as follows.
1) Data and/or pilot signals having a globally unique sequence or time-frequency resource may be defined in the system, and the base station may always transmit the same data and/or pilot signals during NL measurement requests without additional signal exchange with the UE.
2) When each UE accesses the base station, the base station may identify capability information regarding whether the UE can perform NL measurement, and if the UE is determined to be capable of performing NL measurement, the base station may configure information on cell-specific data and/or pilot signals.
3) When each UE accesses the base station, the base station may identify capability information regarding whether the UE is capable of NL measurement, and if the UE is determined to be capable of performing NL measurement, the base station may configure information on UE-specific data and/or pilot signals.
4) A formula for forming globally unique data and/or pilot signals may be defined in the system, and when each UE accesses the base station, the base station may transmit a key parameter (e.g., a sequence number, etc.) of the corresponding formula to the UE.
5) A formula for forming a globally unique data and/or pilot signals may be defined in the system, and when the base station requests the UE to perform NL measurement, the key parameter (e.g., a sequence number, etc.) of the formula may be transmitted to the UE.

Alternatively, if the algorithm for the NL measurement of the UE does not require any additional data, only a pilot signal defined by any one of the above methods may be transmitted without data transmission. Alternatively, the data may be dummy data for NL measurement, and in this case, the base station may inform the UE of the same in the operation of scheduling the data for the UE.

In addition, in a situation where the base station has data to be transmitted to the UE, the base station may request NL measurement by using the existing data, without using additional data and/or pilot signals. In this case, the base station may indicate to the UE data for which NL measurement is requested as follows.
1) Request NL measurement for all data transmission
2) Request NL measurement only for data transmission corresponding to specific time and frequency information
3) Request using separate indicator during scheduling only for transmission of data for which measurement is required

In operation S710, the UE 1-15 may perform non-linearity measurement by using the received data and/or pilot signals. The non-linearity may be measured in the process of compensating for the non-linearity as described with reference to FIG. 4 above, or may be measured separately regardless of the non-linearity compensation.

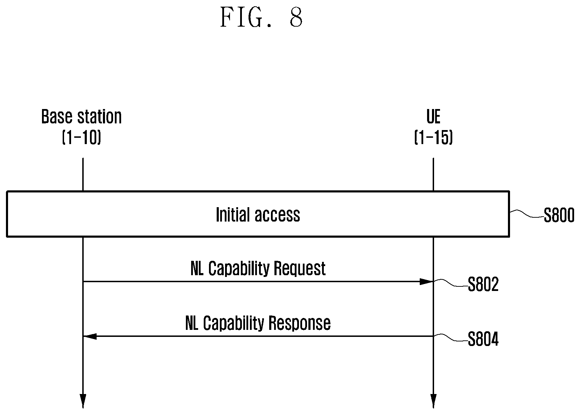

The UE may require a separate processing process other than the process of processing the existing data reception may be necessary for NL measurement. To this end, in a procedure of identifying UE capability information in the operation of accessing the base station by the UE, the UE may transmit information on a processing delay time for NL measurement, an additional battery usage amount, and the like to the base station. More specific operations therefor will be described later in the description of FIG. 8 below.

Alternatively, during the process in which a message regarding NL measurement is transferred, the base station may transmit a request to the UE through a query message, or the information may be exchanged upon the request from the UE. Based on the information, the base station may identify whether the requirement of delay time or reliability of existing data is satisfied even when the UE additionally performs NL measurement, and use the same to determine whether to request the UE to perform NL measurement.

In operation S712, the UE 1-15 may transmit a message (e.g., NL measurement report) for reporting an NL measurement result to the base station 1-10. For example, the message for reporting the NL measurement result may include at least one of the following pieces of information or a combination thereof.
1) Information that directly expresses the degree of non-linearity according to a scheme previously configured by the base station and the UE
2) information that indirectly expressing the degree of non-linearity by using a specific performance metric such as current EVM
3) Maximum supportable MCS level determined by the UE

In operation S714, the base station 1-10 may configure a currently supportable maximum MCS level by using the NL measurement result reported from the UE 1-15, or additionally, the NL measurement results reported from other UE(s). For example, the base station 1-10 may use an algorithm for mapping indirect information such as the degree of non-linearity and EVM, reported by the UE 1-15, to the maximum supportable MCS level. In addition, the base station 1-10 may modify the specific parameters of the algorithm, based on the data transmission result (e.g., statistical information of ACK/NACK, etc.) occurring in the future. The base station 1-10 and the UE 1-15 may perform data transmission and reception, based on the determined maximum supportable MCS level.

In operation S716, the base station 1-10 may identify that the DPD updating for the PA(s) has been completed. The base station 1-10 may store the NL measurement reporting information received from the UE after all DPD updating has been completed, and use the stored information again in case that a situation requiring DPD updating occurs again in the future.

For example, the base station 1-10 may store the NL measurement result reported by the UE in a situation in which DPD updating is required for PAs a, b, and c. Thereafter, when a situation in which DPD updating is required occurs for PAs d, e, and f, the DPD updating for the same number of PAs is required, and thus it may be assumed that the NL level is the same or similar to the previous level. Alternatively, when a problem occurs in the case of other numbers of PAs, such as PAs d, e, f, and g, it may be assumed that the NL level is higher by a difference (e.g., 1) in the number of PAs requiring DPD updating, compared to the previously measured NL level, and this may be used in operation S702 of initially configuring the maximum supportable MCS level.

In the above-described embodiment, it has been assumed that the base station 1-10 has identified the need for DPD updating due to a specific cause, but even in a situation where there is no problem in the PA, the base station 1-10 may perform the above-described operations to identify the degree of non-linearity of the current PA, and operation S700 may be omitted.

The base station 1-10 may identify the current degree of PA non-linearity, and determine whether to perform a coefficient update of the DPD algorithm, based on the information received from the UE 1-15. Alternatively, the base station 1-10 may identify whether the PA has a permanently degraded performance due to an aging effect, etc., based on the information. Accordingly, the result reported by the UE 1-15 may be used in a process of changing a default value of a maximum supportable MCS level.

FIG. 8 is a sequence diagram illustrating a procedure of acquiring non-linearity measurement-related capability information of a UE during initial access according to an embodiment of the disclosure.

Referring to FIG. 8, in operation S800, the base station 1-15 and the UE 1-10 may perform an initial access procedure. For example, the UE 1-10 may search for a synchronization signal block (SSB) to synchronize the downlink, and may acquire system information necessary for initial access through a master information block (MIB) and a system information block (SIB). Thereafter, the UE 1-10 may perform a random access procedure based on the acquired system information, thereby completing RRC setup.

In operation S802, the base station 1-10 may transmit a message (e.g., NL capability request) to the UE 1-15 to request the non-linearity measurement-related capability information. Alternatively, a message (UE capability enquiry) requesting the previously defined UE capability information may be transmitted.

In operation S804, the UE 1-15 may transmit a message (e.g., NL capability response) including the non-linearity measurement-related capability information to the base station 1-10. Alternatively, a message (UE capability information) including the previously defined UE capability information may be transmitted.

The message may include at least one of the following pieces of information or a combination thereof.
- Information on whether the UE supports an NL measurement function
- A UE capability parameter required to define separate data and/or pilot signals when the data and/or pilot signals are required to be transmitted for NL measurement
- Information on overhead (e.g., a processing delay time for NL measurement, additional battery consumption, etc.) required for the UE to perform NL measurement

Based on the above-described information, the base station 1-10 may generate configuration information for NL measurement. In addition, the base station 1-10 may use the capability information of the UE 1-10 in order to identify whether the UE 1-15 supports the NL measurement function, generate separate data and/or pilot signals for the NL measurement, or determine whether to request the UE 1-10 to perform the NL measurement.

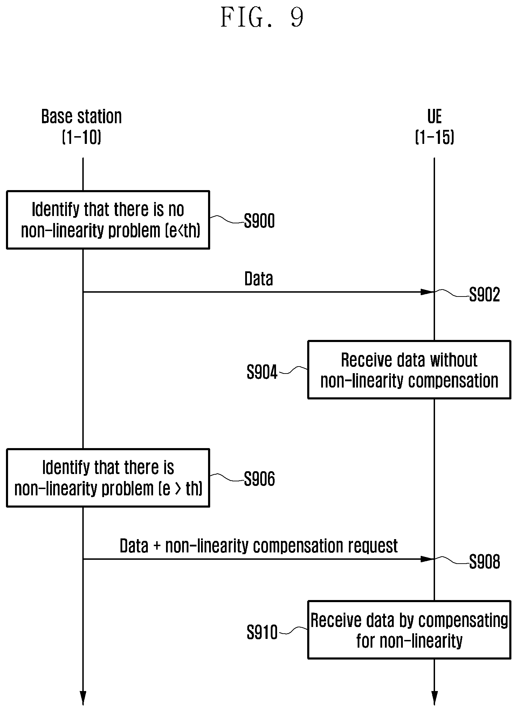

FIG. 9 is a sequence diagram illustrating a procedure in which a UE compensates for non-linearity when a non-linearity problem occurs in a signal transmitted by a base station, according to an embodiment of the disclosure.

Referring to FIG. 9, a method of requesting non-linearity compensation (NC) to a UE 1-15 in case that a non-linearity problem exists in a signal transmitted after a PA stage of a base station 1-10 is illustrated.

For example, the base station 1-10 may sample the signal transmitted after the PA stage and compare the same with a signal before the DPD stage, thereby identifying the degree of signal distortion, the degree of non-linearity, or the like. When it is assumed that a difference between the signal before the DPD stage and the signal after the PA stage is e, a situation in which the corresponding e value is smaller than a specific threshold (th) may be defined as a situation in which there is no problem in non-linearity, and a situation in which the e value is larger than the specific threshold (th) may be defined as a situation in which there is a problem in non-linearity, whereby the base station 1-10 may determine whether a problem in non-linearity compensation of the PA has occurred.

For example, in operation S900, the base station 1-10 may identify that there is no problem in the non-linearity compensation in the PA. In operation S902, the base station 1-10 may transmit data to the UE 1-15. In operation S904, the UE 1-15 may receive data without performing non-linearity compensation.

In operation S906, the base station 1-10 may identify that a problem has occurred in non-linearity compensation in the PA. In operation S908, the base station 1-10 may transmit, to the UE 1-15, information or a message requesting non-linearity compensation together with data. In operation S910, the UE 1-15 may receive data by compensating for non-linearity upon a request from the base station 1-10.

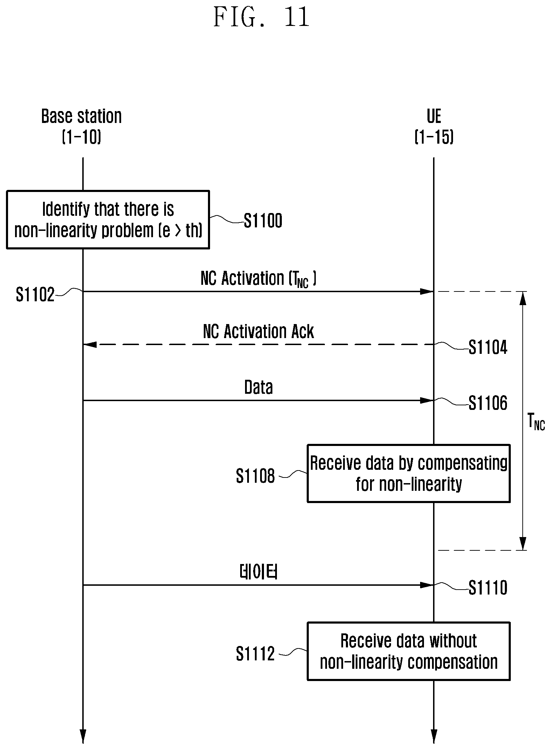

A specific procedure for the base station 1-10 to transmit information or a message requesting non-linearity compensation to the UE 1-15 will be described in more detail in the descriptions of FIGS. 11 to 14 below.

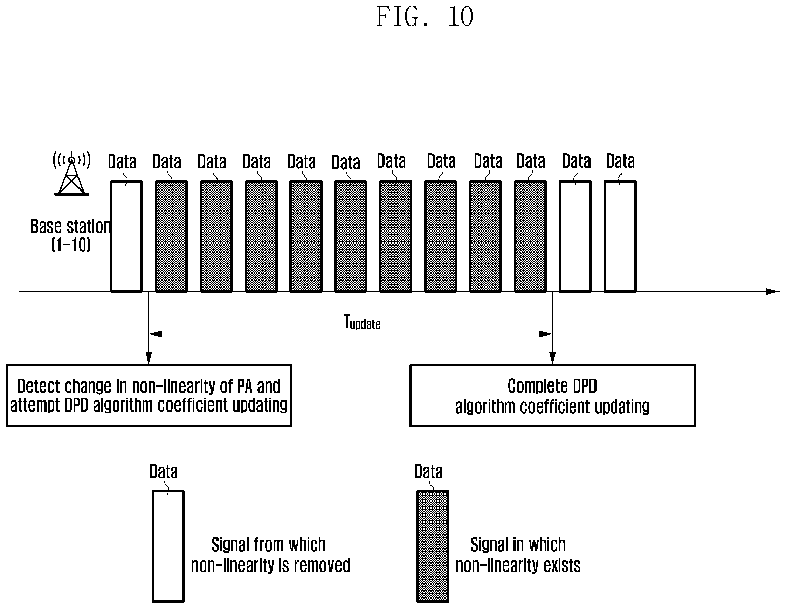

FIG. 10 illustrates a processing time for performing DPD updating by a base station according to an embodiment of the disclosure.

Referring to FIG. 10, the base station 1-10 may compensate for (remove) non-linearity in advance by using DPD so as to transmit a signal. If the base station 1-10 detects a problem or a change in PA non-linearity at a specific time point, the base station 1-10 may attempt DPD updating (or DPD algorithm coefficient updating). However, the base station 1-10 may need a predetermined time (T_{update}) for processing in order to perform the DPD updating, and may transmit a signal having non-linearity during the period. In addition, T_{update} may increase in proportion to the number of coefficients of the DPD algorithm. Therefore, during the DPD algorithm coefficient updating, the PA non-linearity problem is difficult to be solved at the transmitter end (base station), and the receiver end (UE) may receive a signal by performing an additional non-linearity compensation (NC) process during the corresponding period.

FIG. 11 illustrates a procedure in which a base station specifies a time for performing non-linearity compensation to a UE according to an embodiment of the disclosure.

Referring to FIG. 11, there is illustrated a method in which when a non-linearity problem occurs in a signal transmitted after a PA stage of a base station 1-10, the base station 1-10 designates a time T_{NC} for performing NC while requesting non-linearity compensation (NC) to a UE 1-15. A method of performing NC in a receiver end (i.e., a UE) may refer to the description regarding FIG. 4 above.

In operation S1100, the base station 1-10 may identify that there is a problem in non-linearity. For example, as described with reference to FIG. 9, the base station 1-10 may determine that when a difference between a signal before the DPD stage and a signal after the PA stage is assumed as e, a situation in which the corresponding e value is greater than a specific threshold (th) is a situation in which there is a non-linearity problem.

In operation S1102, the base station 1-10 may transmit, to the UE 1-15, a message (e.g., NC activation) requesting the receiver end to perform non-linearity compensation. As described with reference to FIG. 10, if a non-linearity problem occurs in the base station 1-10, the problem is likely to continuously occur for a specific period (T_{update}). Therefore, the base station 1-10 may include information on the time (T_{NC}) for performing non-linearity compensation in the message. Here, the time (T_{NC}) for performing non-linearity compensation may be configured according to any one of the following values.
1) A default value (e.g., T_{NC} = 3 seconds) predefined on the system
2) An average value of time (T_{update}) taken in the past n DPD coefficient updates
3) A maximum value of the time (T_{update}) taken in the past n DPD coefficient updates
4) An average of time (T_{update}) taken in the past n DPD coefficient updates having the same number of PAs as the PAs in which the current problem occurs
5) A maximum value among the values of the time (T_{update}) taken in the past n DPD coefficient updates having the same number of PAs as the PAs in which the current problem occurs
6) The time (T_{update}) taken in the previous DPD coefficient update
7) The time (T_{update}) taken in the previous DPD coefficient update having the same number of PAs as the PAs in which the current problem occurs

In addition, the time (T_{NC}) for performing the non-linearity compensation may be configured in an absolute time unit (e.g., sec or msec), and/or in units of slots and/or symbols.

The UE 1-15 having received the message requesting the non-linearity compensation may start to operate a timer T_{NC}.

In operation S1104, the UE 1-15 may transmit, to the base station 1-10, a response message (e.g., NC activation acknowledgment) to the message requesting the non-linearity compensation. The UE 1-15 may also start the operation of the timer T_{NC} after operation S1104.

In operation S1106, the base station 1-10 may transmit data to the UE 1-15. Here, the data may be a signal to which the DPD is not applied.

In operation S1108, the UE 1-15 may receive data transmitted from the base station 1-10. In this case, if the timer T_{NC} is in operation, the UE 1-15 may receive the data by compensating for the non-linearity.

In operation S1110, the base station 1-10 may transmit data to the UE 1-15. Here, the data may be a signal to which DPD has been applied in accordance with the completion of the DPD coefficient update of the base station 1-10.

In operation S1112, the UE 1-15 may receive data transmitted from the base station 1-10. In this case, if the timer T_{NC} has expired, the UE 1-15 may receive the data without non-linearity compensation.

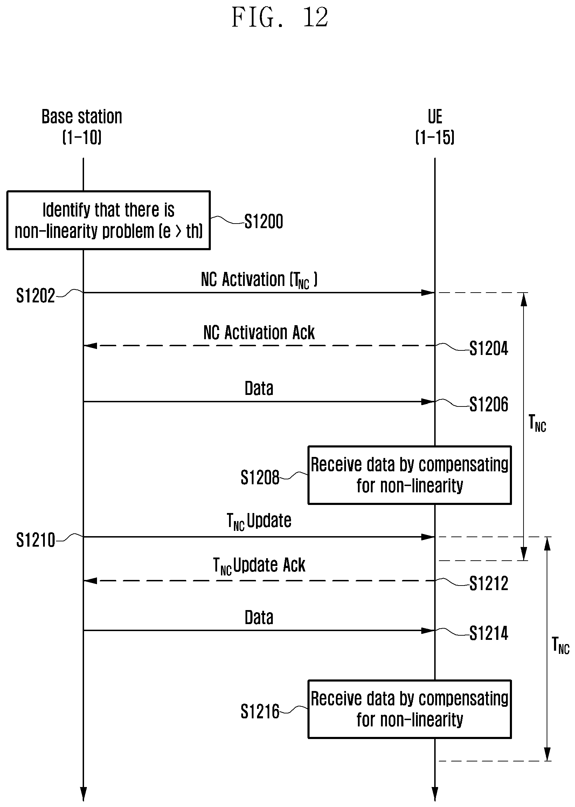

FIG. 12 illustrates a procedure in which a base station updates a time for performing non-linearity compensation for a UE according to an embodiment of the disclosure.

Referring to FIG. 12, an example in which a base station 1-10 has designated a time (T_{NC}) for performing non-linearity compensation for a UE 1-15, but the T_{NC} is updated (reconfigured) due to a reason such as a delay in the processing time for DPD coefficient updating is illustrated.

Operations S1200 to S1208 may be performed similarly to operations S1100 to S1108 in FIG. 11.

In operation S1210, a message (e.g., T_{NC} update) for updating the time (T_{NC}) for performing non-linearity compensation may be transmitted. The UE 1-15 having received the message may start the operation of the T_{NC}. The UE 1-15 may operate the T_{NC} in parallel with a currently operating T_{NC}, and may stop the currently operating T_{NC} and then restart the T_{NC}.

In addition, the message may separately include a new T_{NC} value. The value of the new T_{NC} may be identical to or different from the value of the previously configured T_{NC}. When the message does not include a separate T_{NC} value, the UE 1-15 may operate the T_{NC} assuming that the T_{NC} has the same value as the previously configured TNC or a default value.

In operation S1212, the UE 1-15 may transmit, to the base station 1-10, a response message (e.g., T_{NC} update acknowledgement) to a message for updating a time (T_{NC}) for performing the non-linearity compensation. The UE 1-15 may start to operate the new timer T_{NC} after operation S1212.

In operation S1214, the base station 1-10 may transmit data to the UE 1-15. Here, the data may be a signal to which DPD has not been applied.

In operation S1216, the UE 1-15 may receive data transmitted from the base station 1-10. In this case, even though the timer T_{NC} operated in operations S1202 and S1204 has expired, when the timer T_{NC} newly started in operations S1210 and S1212 is still in operation, the UE 1-15 may receive the data after compensating for non-linearity.

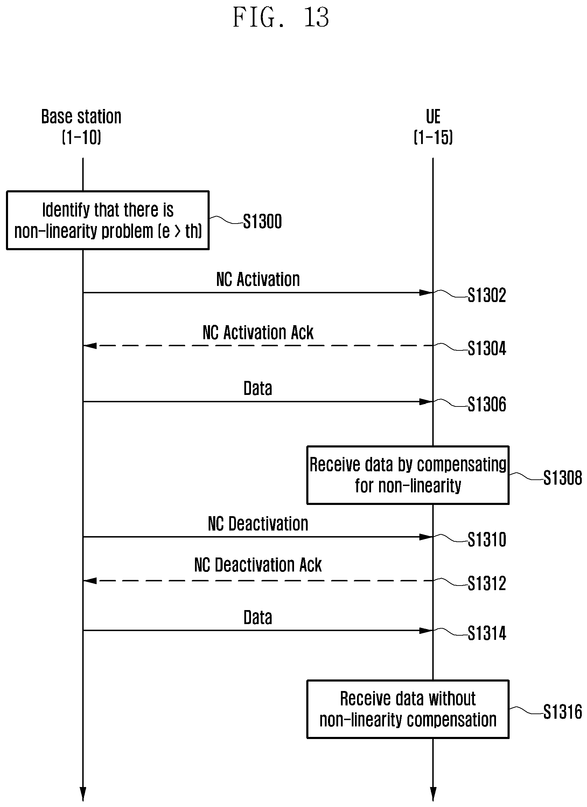

FIG. 13 is a sequence diagram illustrating a procedure for signaling-based non-linearity compensation activation/deactivation according to an embodiment of the disclosure.

Referring to FIG. 13, a method of activating and deactivating a non-linearity compensation (NC) function of a UE 1-15 through explicit signaling of a base station 1-10 is illustrated.

In operation S1300, the base station 1-10 may identify that there is a problem in non-linearity. For example, as described in FIG. 9, when the base station 1-10 assumes that a difference between a signal before the DPD stage and a signal after the PA stage is e, the base station 1-10 may determine that a situation in which the e value is larger than a specific threshold (th) is a situation in which there is a problem in non-linearity.

In operation S1302, the base station 1-10 may transmit, to the UE 1-15, a message (e.g., NC activation) requesting activation of a non-linearity compensation operation at the receiver end.

In operation S1304, the UE 1-15 may transmit, to the base station 1-10, a response message (e.g., NC activation acknowledgment) to a message requesting activation of the non-linearity compensation operation.

The UE 1-15 having received the NC activation or transmitted the NC activation acknowledgment may activate a non-linearity compensation operation.

In operation S1306, the base station 1-10 may transmit data to the UE 1-15. Here, the data may be a signal to which DPD is not applied.

In operation S1308, the UE 1-15 may receive data transmitted from the base station 1-10. In this case, the UE 1-15 for which the non-linearity compensation operation is activated may receive the data after compensating for the non-linearity.

In operation S1310, the base station 1-10 may transmit, to the UE 1-15, a message (e.g., NC Deactivation) requesting deactivation of a non-linearity compensation operation. The message may be transmitted based on a result of identifying, by the base station 1-10, that there is no longer non-linearity issue or that DPD updating has been completed.

In operation S1312, the UE 1-15 may transmit, to the base station 1-10, a response message (e.g., NC Deactivation Acknowledgement) to a message requesting deactivation of the non-linearity compensation operation.

The UE 1-15 having received the NC deactivation or having transmitted the NC deactivation acknowledgment may deactivate the non-linearity compensation operation.

In operation S1312, the base station 1-10 may transmit data to the UE 1-15. Here, the data may be a signal to which DPD has been applied upon the completion of the DPD coefficient update of the base station 1-10.

In operation S1314, the UE 1-15 may receive data transmitted from the base station 1-10. In this case, the UE 1-15 for which the non-linearity compensation operation has been deactivated may receive the data without non-linearity compensation.

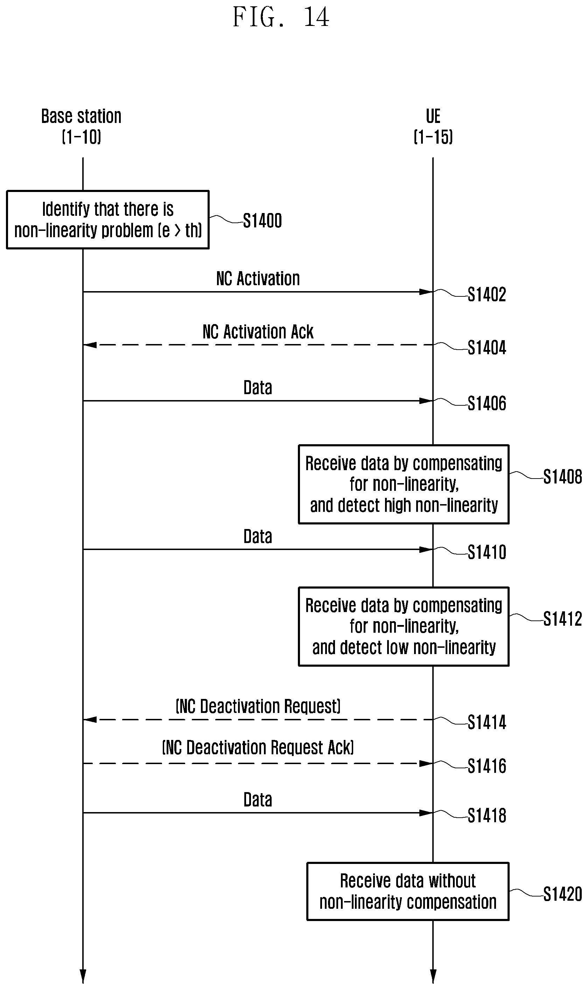

FIG. 14 is a sequence diagram illustrating a procedure for signaling-based non-linearity compensation activation/deactivation according to an embodiment of the disclosure.

Referring to FIG. 14, a method in which a base station 1-10 and a UE 1-15 exchange explicit signaling to activate and deactivate a non-linearity compensation (NC) function of the UE 1-15 is illustrated. However, in FIG. 14, the UE may continuously identify the degree of non-linearity from the data signal transmitted by the base station and request the base station to deactivate the non-linearity compensation operation when the non-linearity is determined to be low.

In operation S1400, the base station 1-10 may identify that there is a problem in the non-linearity. For example, as described in FIG. 9, when it is assumed that a difference between a signal before the DPD stage and a signal after the PA stage is e, the base station 1-10 may determine that a situation in which the corresponding e value is larger than a specific threshold (th) is a situation in which there is a problem in non-linearity.

In operation S1402, the base station 1-10 may transmit, to the UE 1-15, a message (e.g., NC activation) requesting activation of a non-linearity compensation operation at the receiver end.

In operation S1404, the UE 1-15 may transmit, to the base station 1-10, a response message (e.g., NC activation acknowledgment) to a message requesting activation of the non-linearity compensation operation.

The UE 1-15 having received the NC activation or transmitted the NC activation acknowledgement may activate a non-linearity compensation operation.

In operation S1406, the base station 1-10 may transmit data to the UE 1-15. Here, the data may be a signal to which DPD has not been applied.

In operation S1408, the UE 1-15 may receive data transmitted from the base station 1-10. In this case, the UE 1-15 for which the non-linearity compensation operation has been activated may receive the data by compensating for the non-linearity. When non-linearity at a predetermined level or higher is detected for the data, the UE 1-15 may continue to activate the non-linearity compensation operation.

In operation S1410, the base station 1-10 may transmit data to the UE 1-15. Here, the data may be a signal to which DPD is applied, or may be a signal to which DPD is not applied, upon the completion of the DPD coefficient updating of the base station 1-10.

In operation S1412, the UE 1-15 may receive the data transmitted from the base station 1-10. In this case, the UE 1-15 for which the non-linearity compensation operation has been activated may receive the data by compensating for the non-linearity. Unlike operation S1408, when non-linearity at a predetermined level or lower is detected for the data, the UE 1-15 may determine to deactivate the non-linearity compensation operation.

In operation S1414, the UE 1-15 which has determined to deactivate the non-linearity compensation operation may transmit, to the base station 1-10, a message (e.g., NC deactivation request) requesting deactivation of the non-linearity compensation operation. In another embodiment, the UE 1-15 may deactivate the NC function by itself, without transmitting a separate message (e.g., NC Deactivation Request) to the base station 1-10.

In operation S1416, the base station 1-15 may transmit, to the UE 1-15, a response message (e.g., NC Deactivation Request Acknowledgement) to a message requesting deactivation of the non-linearity compensation operation.

The UE 1-15 having transmitted the NC deactivation request or received the NC deactivation request acknowledgment may deactivate the non-linearity compensation operation.

In operation S1418, the base station 1-10 may transmit data to the UE 1-15. Here, the data may be a signal to which DPD has been applied upon the completion of DPD coefficient updating of the base station 1-10.

In operation S1420, the UE 1-15 may receive the data transmitted from the base station 1-10. In this case, the UE 1-15 for which the non-linearity compensation operation has been deactivated may receive the data without non-linearity compensation.

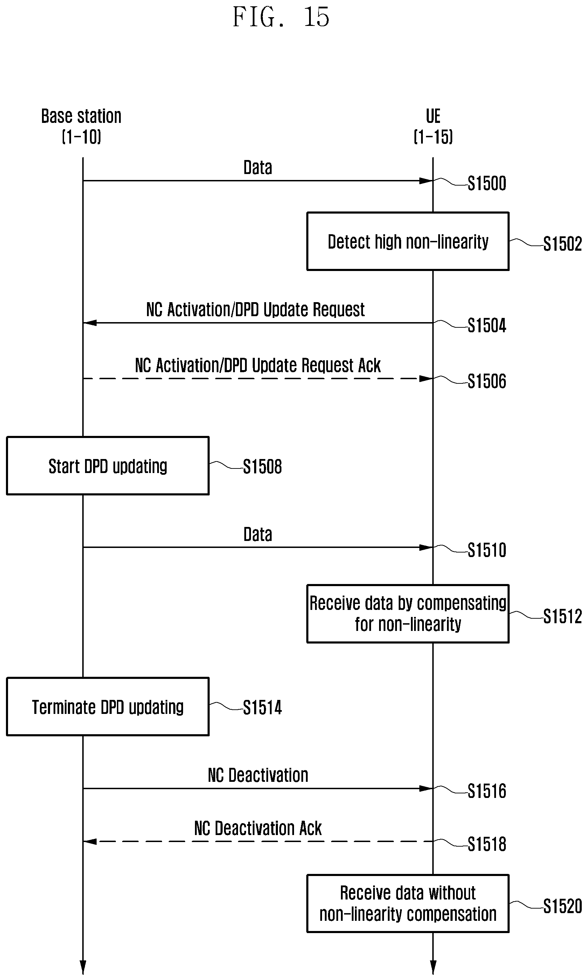

FIG. 15 is a sequence diagram illustrating a procedure for signaling-based non-linearity compensation activation/deactivation according to an embodiment of the disclosure.

Referring to FIG. 15, a method in which a non-linearity compensation (NC) operation is activated by proactive non-linearity measurement by the UE 1-15 and NC is deactivated by the base station 1-10 is illustrated.

In operation S1500, the base station 1-10 may transmit data to the UE 1-15. Here, the data may be a signal to which DPD is not applied.

In operation S1502, the UE 1-15 may measure non-linearity of data transmitted from the base station 1-10. The non-linearity may be measured in a process of compensating for non-linearity, as described in the above-described FIG. 4, or may be separately measured regardless of non-linearity compensation. When the non-linearity is determined to be high, the UE 1-15 may determine to activate a UE non-linearity compensation operation.

In operation S1504, the UE 1-15 may transmit a message (e.g., NC activation request or DPD update request) requesting activation of the non-linearity compensation operation in the receiver end and/or DPD updating in the transmitter end.

In operation S1506, the base station 1-10 may transmit, to the UE 1-15, a response message (e.g., NC activation request acknowledgment or DPD update request acknowledgment) to a message requesting activation of the non-linearity compensation operation or a message requesting DPD updating.

The UE 1-15 having transmitted the NC activation/DPD update request or received the NC activation/DPD update request acknowledgment may activate a non-linearity compensation operation.

In operation S1508, the base station 1-10 having received the NC activation/DPD update request or transmitted the NC activation/DPD update request acknowledgement may start DPD updating (or DPD algorithm coefficient updating).

In operation S1510, the base station 1-10 may transmit data to the UE 1-15. Here, the data may be a signal to which the DPD has not been applied.

In operation S1512, the UE 1-15 may receive the data transmitted from the base station 1-10. In this case, the UE 1-15 for which the non-linearity compensation operation has been activated may receive the data by compensating for non-linearity.

In operation S1514, the base station 1-10 may identify that the DPD updating has been completed (terminated).

In operation S1516, the base station 1-10 having completed the DPD updating may transmit, to the UE 1-15, a message (e.g., NC deactivation) requesting to deactivate the non-linearity compensation operation.

In operation S1518, the UE 1-10 may transmit, to the base station 1-10, a response message (e.g., NC deactivation acknowledgement) to a message requesting deactivation of the non-linearity compensation operation.

The UE 1-15 having received the NC deactivation or transmitted the NC deactivation acknowledgement may deactivate the non-linearity compensation operation.

In operation S1520, the UE 1-15 having the deactivated non-linearity compensation operation may receive data from the base station 1-10 without non-linearity compensation thereafter.

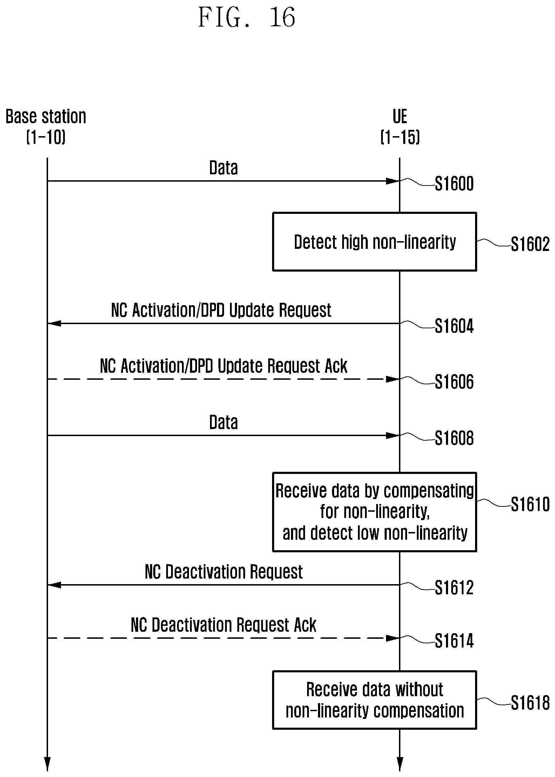

FIG. 16 is a sequence diagram illustrating a procedure for signaling-based non-linearity compensation activation/deactivation according to an embodiment of the disclosure.

Referring to FIG. 16, a method in which a non-linearity compensation (NC) operation is activated and deactivated by proactive non-linearity measurement by a UE (1-15) is illustrated.

In operation S1600, the base station 1-10 may transmit data to the UE 1-15. The data may be a signal to which DPD is not applied.

In operation S1602, the UE 1-15 may measure non-linearity of the data transmitted from the base station 1-10. The non-linearity may be measured in a process of compensating for non-linearity, as described in the above-described FIG. 4, or may be separately measured regardless of non-linearity compensation. When the non-linearity is determined to be high, the UE 1-15 may determine to activate a UE non-linearity compensation operation.

In operation S1604, the UE 1-15 may transmit a message (e.g., NC activation request or DPD update request) requesting activation of the non-linearity compensation operation at the receiver end and/or DPD updating at the transmitter end.

In operation S1606, the base station 1-10 may transmit, to the UE 1-15, a response message (e.g., NC activation request acknowledgement or DPD update request acknowledgement) to a message requesting activation of the non-linearity compensation operation or a message requesting DPD updating.

The UE 1-15 having transmitted the NC activation/DPD update request or received the NC activation/DPD update request acknowledgement may activate a non-linearity compensation operation. In addition, the base station 1-10 having received the NC activation/DPD update request or transmitted the NC activation/DPD update request acknowledgment may start DPD updating (or DPD algorithm coefficient updating).

In operation S1608, the base station 1-10 may transmit data to the UE 1-15. Here, the data may be a signal to which DPD has been applied, or a signal to which DPD has not been applied, upon the completion of the DPD coefficient updating by the base station 1-10.

In operation S1610, the UE 1-15 may receive data transmitted from the base station 1-10. In this case, the UE 1-15 for which the non-linearity compensation operation has been activated may receive the data by compensating for the non-linearity. When the UE 1-15 measures non-linearity of data transmitted by the base station and detects non-linearity at a predetermined level or lower, the UE 1-15 may determine to deactivate the non-linearity compensation operation.

In operation S1612, the UE 1-15 having determined to deactivate the non-linearity compensation operation may transmit, to the base station 1-10, a message (e.g., NC deactivation request) requesting the deactivation of the non-linearity compensation operation.

In operation S1614, the base station 1-15 may transmit, to the UE 1-15, a response message (e.g., NC deactivation request acknowledgment) to a message requesting deactivation of the non-linearity compensation operation.

The UE 1-15 having transmitted the NC deactivation request or received the NC deactivation request acknowledgment may deactivate the non-linearity compensation operation.

In operation S1618, the UE 1-15 for which the non-linearity compensation operation has been deactivated may receive data from the base station 1-10 without non-linearity compensation thereafter.

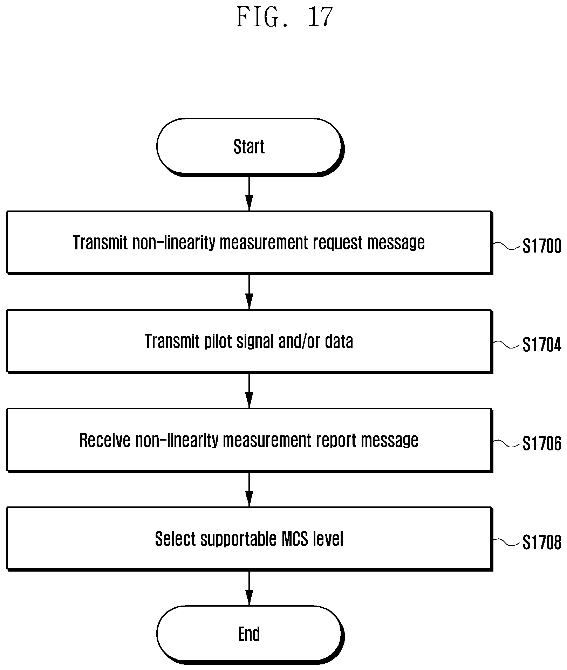

FIG. 17 is a flowchart illustrating operation of a base station according to an embodiment of the disclosure.

Referring to FIG. 17, the operation performed by the base station 1-10 of FIGS. 1 to 16 described above is illustrated.

In operation S1700, the base station may transmit a non-linearity measurement request message. For example, the base station may transmit the message, based on identification that DPD updating for the PA(s) is required, or may transmit the message in order to identify the degree of non-linearity of the current PA. For example, the base station may determine an MCS level according to the number of PAs requiring DPD updating, based on a pre-determined rule. For example, the base station may determine at least one UE for which non-linearity measurement is to be requested, based on at least one of a round robin scheme, a random selection scheme, data to be transmitted, or the current channel situation, and transmit the non-linearity measurement request message to the at least one UE.

In operation S1704, the base station may transmit a pilot signal and/or data. For example, the pilot signal and/or data may be transmitted based on a predefined sequence or a predefined time-frequency resource, transmitted based on cell-specifically or UE-specifically configured information, or transmitted based on a predefined formula.

In operation S1706, the base station may receive a non-linearity measurement report message. For example, the non-linearity measurement report message may include information on the non-linearity measurement result based on the pilot signal and/or data. For example, information on the non-linearity measurement result may include at least one of information directly indicating the degree of non-linearity, information on a performance metric according to the degree of non-linearity, or information on a maximum supportable MCS level determined by the UE.

In operation S1708, the base station may select a supportable MCS level. For example, in case that the information on the non-linearity measurement result includes the information on the performance measurement metric, the base station may determine the supportable MCS level mapped to the performance measurement metric, and adjust the supportable MCS level later according to a data transmission result.

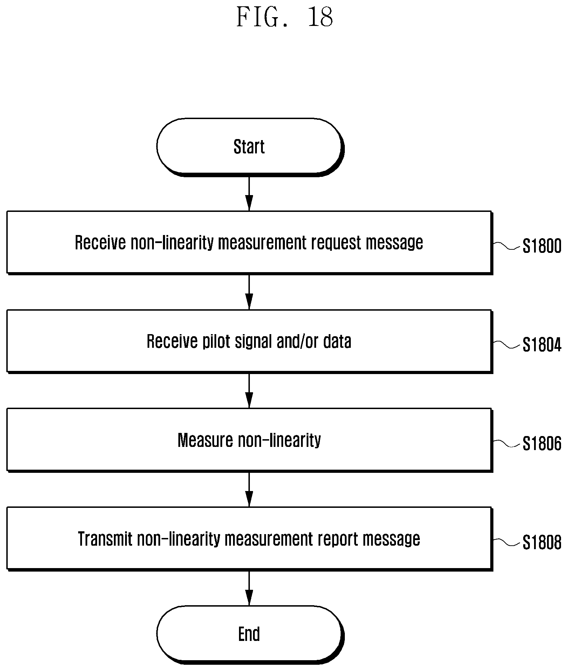

FIG. 18 is a flowchart illustrating operation of a UE according to an embodiment of the disclosure.

Referring to FIG. 18, the operation performed by the UE 1-15 in FIGS. 1 to 16 described above are illustrated.

In operation S1800, the UE may receive a non-linearity measurement request message. For example, the message may be transmitted based on the identification that the base station requires DPD updating for the PA(s), or the base station may transmit the message to identify the degree of non-linearity of the current PA. For example, even before receiving the non-linearity measurement request message, the base station may determine an MCS level according to the number of PAs for which DPD updating is required, based on a predetermined rule. For example, the UE may be selected by the base station to request non-linearity measurement, based on at least one of a round robin scheme, a random selection scheme, data to be transmitted, or a current channel situation.

In operation S1804, the UE may receive a pilot signal and/or data. For example, the pilot signal and/or data may be received based on a predefined sequence or a predefined time-frequency resource, received based on cell-specifically or UE-specifically configured information, or received based on a predefined formula.

In operation S1806, the UE may measure non-linearity. For example, the UE may measure the non-linearity of the pilot signal and/or data. The non-linearity may be measured in a process of compensating for non-linearity as in FIG. 4, or may be separately measured regardless of non-linearity compensation.

In operation S1808, the UE may transmit a non-linearity measurement reporting message. For example, the non-linearity measurement report message may include information on a non-linearity measurement result based on the pilot signal and/or data. For example, the information on the non-linearity measurement result may include at least one of information directly indicating the degree of non-linearity, information on a performance metric according to the degree of non-linearity, and information on the maximum supportable MCS level determined by the UE. For example, information on the non-linearity measurement result may be associated with the MCS level supportable by the base station. For example, if information on the performance measurement metric is included in the information on the non-linearity measurement result, the base station may determine a supportable MCS level mapped to the performance measurement metric, and may adjust the supportable MCS level later according to a data transmission result.

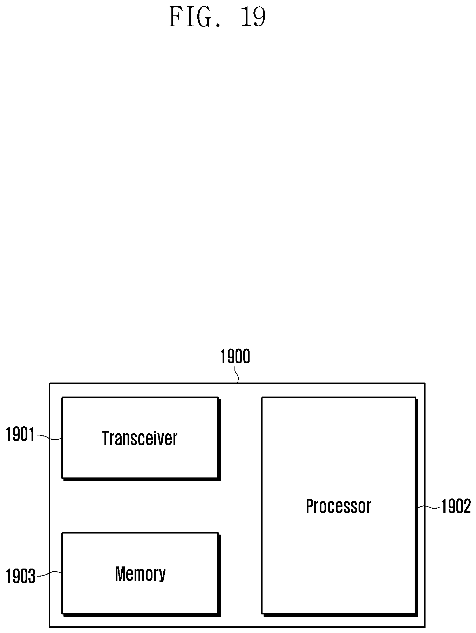

FIG. 19 illustrates a block diagram of a UE according to an embodiment of the disclosure.

Referring to FIG. 19, the UE 1900 may correspond to the UE 1-15 illustrated in FIGS. 1 to 18. The UE 1900 may include a transceiver 1901, a controller (processor) 1902, and a storage (memory) 1903. The transceiver 1901, the controller 1902, and the storage 1903 of the UE 1900 may operate according to an embodiment of the disclosure. However, components of the UE 1900 according to an embodiment are not limited to the above-described example. According to another embodiment, the UE 1900 may include a larger or smaller number of components than the above-described components. Furthermore, in a specific case, the transceiver 1901, the controller 1902, and the storage 1903 may be implemented in the form of a single chip.

According to another embodiment, the transceiver 1901 may include a transmitter and a receiver. The transceiver 1901 may transmit/receive signals with base stations. The signals may include control information and data. To this end, the transceiver 1901 may include an RF transmitter configured to up-convert and amplify the frequency of transmitted signals, an RF receiver configured to low-noise-amplify received signals and down-convert the frequency thereof, and the like. The transceiver 1901 may receive signals through a radio channel, output the same to the controller 1902, and transmit signals output from the controller 1902 through the radio channel.

The controller 1902 may control a series of processes so that the UE 1900 can operate according to the above-described embodiments of the disclosure. To this end, the controller 1902 may include at least one processor. For example, the controller 1902 may include a communication processor (CP) configured to perform control for communication, and an application processor (AP) configured to control upper layers such as application programs. For example, the controller 1902 may control the transceiver 1901 to receive a non-linearity measurement request message, control the transceiver 1901 to receive at least one of a pilot signal or data, and control the transceiver 1901 to transmit a non-linearity measurement report message including information on a non-linearity measurement result based on the at least one of the pilot signal or the data.

The storage 1903 may store control information or data included in a signal acquired by the UE 1900, and may have an area for storing data necessary for control of the controller 1902, data generated when the controller 1902 performs control, etc.

In addition, the UE 1900 may include an AI device (not illustrated) capable of performing at least a part of AI processing. The AI device may include an AI processor, a memory, and/or a communication unit.

For example, the controller 1902 may operate as an AI processor or perform at least some functions of an AI processor. The AI processor may train a neural network by using a program stored in the memory. Here, the neural network may be designed to simulate the structure of a human brain on a computer, and may include multiple network nodes having weights to simulate neurons of the human neural network. The multiple network nodes may exchange data according to the respective connection relationships to simulate synaptic activities of neurons that exchange signals through synapses. Here, the neural network may include a deep learning model developed from a neural network model. In a deep learning model, multiple network nodes may be located in different layers and exchange data according to a convolutional connection relationship.

The AI processor may include a data learning unit for training a neural network for data classification/recognition. The data learning unit may classify data to be used for learning and acquire data for training. The data learning unit may train the deep learning model by applying the acquired training data to the deep learning model. For example, the deep learning model may be trained through supervised or unsupervised learning. In addition, the data learning unit may train the deep learning model through reinforcement learning by using feedback regarding whether the result of the situation determination according to the learning is correct. The deep learning model may be trained based on data of the input layer and the output layer.

The data learning unit may be produced in the form of at least one hardware chip and mounted on the AI device. For example, the data learning unit may be produced in the form of a dedicated hardware chip for artificial intelligence (AI), or may be produced as part of a general-purpose processor (CPU) or a graphics processing unit (GPU) and mounted on an AI device. In addition, the data learning unit may be implemented by a software module. When implemented as a software module (or a program module including instructions), the software module may be stored in non-transitory computer readable recording media. In this case, the at least one software module may be provided by an operating system (OS) or provided by an application.

For example, the storage 1903 may include a memory of the AI device. The memory may store various programs and data necessary for the operation of the AI device. The memory is accessed by the AI processor, and the AI processor may perform data reading/writing/modifying/deleting/updating, and the like. For example, the data learning unit may store, in the memory, a trained model associated with input and output relationship information of the PA.

For example, the communication unit of the AI device may be included in the transceiver 1901.

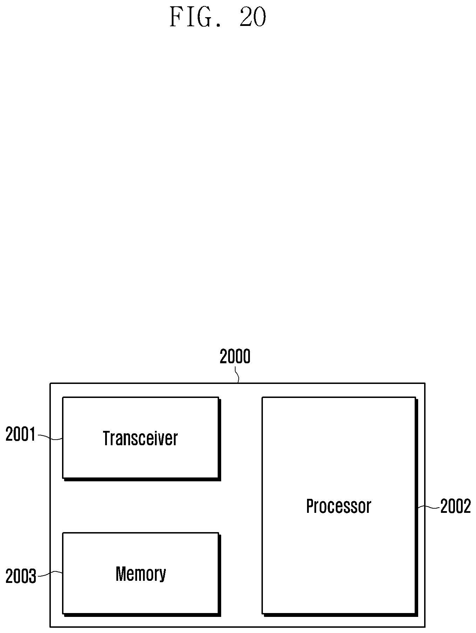

FIG. 20 illustrates a block diagram of a base station according to an embodiment of the disclosure.

Referring to FIG. 20, the base station 2000 may correspond to the base station 1-10 illustrated in FIGS. 1 to 18. The base station 2000 may include a transceiver 2001, a controller (processor) 2002, and a storage (memory ) 2003. The transceiver 2001, the controller 2002, and the storage 2003 of the base station 2000 may operate according to an embodiment of the disclosure. However, components of the base station 2000 according to an embodiment are not limited to the above-described example. According to another embodiment, the base station 2000 may include a larger or smaller number of components than the above-described components. Furthermore, in a specific case, the transceiver 2001, the controller 2002, and the storage 2003 may be implemented in the form of a single chip.

According to another embodiment, the transceiver 2001 may include a transmitter and a receiver. The transceiver 2001 may transmit/receive signals with UEs. The signals may include control information and data. To this end, the transceiver 2001 may include an RF transmitter configured to up-convert and amplify the frequency of transmitted signals, an RF receiver configured to low-noise-amplify received signals and down-convert the frequency thereof, and the like. The transceiver 2001 may receive signals through a radio channel, output the same to the controller 2002, and transmit signals output from the controller 2002 through the radio channel.

The controller 2002 may control a series of processes so that the base station 2000 can operate according to the above-described embodiments of the disclosure. To this end, the controller 2002 may include at least one processor. For example, the controller 2002 may include a communication processor (CP) configured to perform control for communication, and an application processor (AP) configured to control upper layers such as application programs. For example, the controller 2002 may control the transceiver 2001 to transmit a non-linearity measurement request message, control the transceiver 2001 to transmit at least one of a pilot signal or data, control the transceiver 2001 to receive a non-linearity measurement report message including information on a non-linearity measurement result based on the at least one of the pilot signal or the data, and determine a supportable modulation and coding scheme (MCS) level, based on the information on the non-linearity measurement result.

The storage 2003 may store control information or data determined by the base station 2000, or control information or data received from the UE, and may have an area for storing data necessary for control of the controller 2002, data generated when the controller 2002 performs control, etc.

In addition, the base station 2000 may include an AI device (not illustrated) capable of performing at least a part of AI processing. The AI device may include an AI processor, a memory, and/or a communication unit.

For example, the controller 2002 may operate as an AI processor or perform at least some functions of an AI processor. The AI processor may train a neural network by using a program stored in the memory. Here, the neural network may be designed to simulate the structure of a human brain on a computer, and may include multiple network nodes having weights to simulate neurons of the human neural network. The multiple network nodes may exchange data according to the respective connection relationships to simulate synaptic activities of neurons that exchange signals through synapses. Here, the neural network may include a deep learning model developed from a neural network model. In a deep learning model, multiple network nodes may be located in different layers and exchange data according to a convolutional connection relationship.

The AI processor may include a data learning unit for training a neural network for data classification/recognition. The data learning unit may classify data to be used for learning and acquire data for training. The data learning unit may train the deep learning model by applying the acquired training data to the deep learning model. For example, the deep learning model may be trained through supervised or unsupervised learning. In addition, the data learning unit may train the deep learning model through reinforcement learning by using feedback regarding whether the result of the situation determination according to the learning is correct. For example, the data learning unit may classify a received pilot part as input layer data, and may reflect a size scaling factor in a known pilot and classify the same as output layer data. The deep learning model may be trained based on data of the input layer and the output layer. In addition, an inference may be made using a data part of a received signal as an input layer, based on a trained model.

The data learning unit may be produced in the form of at least one hardware chip and mounted on the AI device. For example, the data learning unit may be produced in the form of a dedicated hardware chip for artificial intelligence (AI), or may be produced as part of a general-purpose processor (CPU) or a graphics processing unit (GPU) and mounted on an AI device. In addition, the data learning unit may be implemented by a software module. When implemented as a software module (or a program module including instructions), the software module may be stored in non-transitory computer readable recording media. In this case, the at least one software module may be provided by an OS or provided by an application.

For example, the storage 2003 may include a memory of the AI device. The memory may store various programs and data necessary for the operation of the AI device. The memory is accessed by the AI processor, and the AI processor may perform data reading/writing/modifying/deleting/updating, and the like. For example, the data learning unit may store, in the memory, a trained model associated with input and output relationship information of the PA.

For example, the communication unit of the AI device may be included in the transceiver 2001.

In methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

Furthermore, although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

## Claims

1. A method performed by a base station in a wireless communication system, the method comprising:
transmitting a non-linearity measurement request message;
transmitting at least one of a pilot signal or data;
receiving a non-linearity measurement report message comprising information on a non-linearity measurement result based on the at least one of the pilot signal or the data; and
based on the information on the non-linearity measurement result, determining a supportable modulation and coding scheme (MCS) level.

2. The method of claim 1, further comprising:
before transmitting the non-linearity measurement request message, identifying that a digital pre-distortion (DPD) model for one or more power amplifiers (PAs) of the base station needs to be updated; and
based on a predetermined rule, determining a maximum supportable MCS level according to the number of the one or more PAs.

3. The method of claim 1, wherein the transmitting of the non-linearity measurement request message comprises:
based on at least one of a round robin scheme, a random selection, data to be transmitted, or a current channel situation, determining one or more terminals for which non-linearity measurement is to be requested; and
transmitting the non-linearity measurement request message to the one or more terminals.

4. The method of claim 1, wherein the at least one of the pilot signal or the data is transmitted based on a predefined sequence or a predefined time-frequency resource, is transmitted based on cell-specifically or terminal-specifically configured information, or is transmitted based on a predefined formula,
wherein the information on the non-linearity measurement result comprises at least one of information directly indicating a degree of non-linearity, information on a performance metric according to a degree of non-linearity, or information on a maximum supportable MCS level determined by a terminal, and
wherein the determining of the supportable MCS level comprises:
in case that the information on the non-linearity measurement result comprises the information on the performance measurement metric, determining the supportable MCS level mapped to the performance measurement metric; and
subsequently adjusting the supportable MCS level according to a data transmission result.

5. The method of claim 1, further comprising:
transmitting a message requesting non-linearity measurement-related capability information; and
receiving a message comprising at least one of information on whether a non-linearity measurement function is supported, a terminal capability parameter related to the at least one of the pilot signal or the data, or information on overhead required for non-linearity measurement.

6. A method performed by a terminal in a wireless communication system, the method comprising:
receiving a non-linearity measurement request message;
receiving at least one of a pilot signal or data; and
transmitting a non-linearity measurement report message comprising information on a non-linearity measurement result based on the at least one of the pilot signal or the data,
wherein the information on the non-linearity measurement result is associated with a modulation and coding scheme (MCS) level supportable by a base station.

7. The method of claim 6, wherein the at least one of the pilot signal or the data is received based on a predefined sequence or a predefined time-frequency resource, is received based on cell-specifically or terminal-specifically configured information, or is received based on a predefined formula.

8. The method of claim 6, wherein the information on the non-linearity measurement result comprises at least one of information directly indicating a degree of non-linearity, information on a performance metric according to a degree of non-linearity, or information on a maximum supportable MCS level determined by a terminal.

9. A base station in a wireless communication system, the base station comprising:
a transceiver; and
a controller configured to control the transceiver to transmit a non-linearity measurement request message, control the transceiver to transmit at least one of a pilot signal or data, control the transceiver to receive a non-linearity measurement report message comprising information on a non-linearity measurement result based on the at least one of the pilot signal or the data, and based on the information on the non-linearity measurement result, determine a supportable modulation and coding scheme (MCS) level.

10. The base station of claim 9, wherein the controller is configured to:
before transmitting the non-linearity measurement request message, identify that a digital pre-distortion (DPD) model for one or more power amplifiers (PAs) of the base station needs to be updated; and
based on a predetermined rule, determine a maximum supportable MCS level according to the number of the one or more PAs.

11. The base station of claim 9, wherein the controller is configured to:
based on at least one of a round robin scheme, a random selection, data to be transmitted, or a current channel situation, determine one or more terminals for which non-linearity measurement is to be requested; and
control the transceiver to transmit the non-linearity measurement request message to the one or more terminals.

12. The base station of claim 9, wherein the at least one of the pilot signal or the data is transmitted based on a predefined sequence or a predefined time-frequency resource, is transmitted based on cell-specifically or terminal-specifically configured information, or is transmitted based on a predefined formula,
wherein the information on the non-linearity measurement result comprises at least one of information directly indicating a degree of non-linearity, information on a performance metric according to a degree of non-linearity, or information on a maximum supportable MCS level determined by a terminal, and
wherein the controller is configured to:
in case that the information on the non-linearity measurement result comprises the information on the performance measurement metric, determine the supportable MCS level mapped to the performance measurement metric; and
subsequently adjust the supportable MCS level according to a data transmission result.

13. The base station of claim 9, wherein the controller is configured to:
control the transceiver to transmit a message requesting non-linearity measurement-related capability information; and
control the transceiver to receive a message comprising at least one of information on whether a non-linearity measurement function is supported, a terminal capability parameter related to the at least one of the pilot signal or the data, or information on overhead required for non-linearity measurement.

14. A terminal in a wireless communication system, the terminal comprising:
a transceiver; and
a controller configured to control the transceiver to receive a non-linearity measurement request message, control the transceiver to receive at least one of a pilot signal or data, and control the transceiver to transmit a non-linearity measurement report message comprising information on a non-linearity measurement result based on the at least one of the pilot signal or the data,
wherein the information on the non-linearity measurement result is associated with a modulation and coding scheme (MCS) level supportable by a base station.

15. The terminal of claim 14, wherein the at least one of the pilot signal or the data is received based on a predefined sequence or a predefined time-frequency resource, is received based on cell-specifically or terminal-specifically configured information, or is received based on a predefined formula, and
wherein the information on the non-linearity measurement result comprises at least one of information directly indicating a degree of non-linearity, information on a performance metric according to a degree of non-linearity, or information on a maximum supportable MCS level determined by the terminal.
